Europäisches Patentamt

European Patent Office

Office européen des brevets

(19)

(11) Publication number: **0 195 494**
**B1**

(12) **EUROPEAN PATENT SPECIFICATION**

(45) Date of publication of the patent specification:
**29.11.89**

(51) Int. Cl.⁴: **B 07 C 5/342**

(21) Application number: **86300242.4**

(22) Date of filing: **15.01.86**

(54) Window cleaning device for use in optical method article selector apparatus.

(30) Priority: **07.03.85 JP 45627/85**

(43) Date of publication of application:
**24.09.86 Bulletin 86/39**

(45) Publication of the grant of the patent:
**29.11.89 Bulletin 89/48**

(84) Designated Contracting States:
**DE FR GB IT NL**

(56) References cited:
**EP-A- 0 045 576**
**EP-A- 0 061 883**
**DE-A- 2 847 676**

(73) Proprietor: **Toyo Seimaiki Seisakusho Kabushiki Kaisha, 12, Kuroda, Wakayama (JP)**

(72) Inventor: **Saika, Nobuo, 255-8, Inbe, Wakayama (JP)**

(74) Representative: **Lee, Philip Graham et al, MARKS & CLERK 57/60 Lincoln's Inn Fields, London WC2A 3LS (GB)**

ACTORUM AG

## Description

This invention relates to a device for cleaning the window through which there is transmitted an irradiating light ray in apparatus for selecting a particulate agricultural product such as a grain and a bean or a particulate mineral and industrial product, depending upon the colour of its surface.

In general, there is already used apparatus for selecting particulate articles such as an agricultural product, depending upon the colour of its surface. The structure of the selector is such that whilst the articles to be selected are falling they are irradiated by a light ray. Inspection of whether the quantitiy of the reflected rays and the transmission rays from the articles to be selected are normal is used to judge whether the articles are normal or abnormal, so that if abnormal they can be exposed to an instantaneous jet stream which blows off only an abnormal particulate article to eliminate the same.

Since this selector eliminates by means of a jet stream, a fine dust included in the articles to be selected, e.g. a sugar, a particulate dust and the like included in the grain is blown up in the machine.

Although it is true that since the space in which the selecting performance is executed is covered with a bulkhead, dust cannot adhere to various parts in the machine, or be ejected from the machine, the transparent window, through which the ray for irradiating the falling articles to be selected is transmitted can unavoidably accumulate dust. If any dust adheres to the window, it obstructs the transmission of the ray, and constitutes a bad influence on the selection on the basis of the quantity of the rays. For this reason, there is a necessity for a device for cleaning the dust which adheres to the window. Such a cleaning device has conventionally been proposed in EP-AI-61 883. The structure of the conventional cleaning device includes a scraper, similar to a window wiper for an automobile, mounted against the surface of the window, this scraper being adapted to be moved along the surface of the window at adequately fixed time intervals, thereby eliminating the dust which adheres to the window. Nevertheless, the conventional cleaning device has a defect in that the ray is interrupted when the scraper is moved. For this reason, at the time of the cleaning process, the selecting work cannot be continued and whenever the cleaning work is performed, the selector must be stopped for a while. For this reason, the conventional selector is extremely inefficient.

The primary purpose of the invention is to provide a cleaning device, which is simple in structure and low in production cost, which can be used along the ray transmission window of the optical selector.

Another purpose of the present invention is to provide a cleaning device capable of eliminating fully and efficiently the dust which adheres to the surface of the ray transmission window.

A further purpose of the present invention is to provide a device capable of cleaning the window without any interruption in the operation of the selector.

A still further purpose of the present invention is to provide a cleaning device capable of performing the cleaning work of the window not only intermittently at adequately fixed time intervals but also continuously.

A still further purpose of the present invention is to provide a device capable of cleaning the window without obstructing the optical inspection of the dust eliminated from the window.

These purposes are met by an optical selector apparatus having the characteristics of the appended claim 1.

Other characteristics and advantages of the present invention should become apparent from the following description in conjunction with the accompanying drawings. In these drawings:

Fig. 1 is a sectional view of the overall outline of the mechanism of an optical selector which incorporates one preferred embodiment of the cleaning device according to the present invention;

Fig. 2 is a perspective view which partially illustrates the ray transmission window of the embodiment of Fig. 1;

Fig. 3 is a sectional view of the part of the window of the embodiment of Fig. 1;

Fig. 4 is a side view of a drive mechanism for moving the window vertically; and

Figs. 5 and 6 are side views of another embodiment of the scraper, in which Fig. 5 illustrates the state of making a descent of the window, while Fig. 6 illustrates the state of making an ascent of the window.

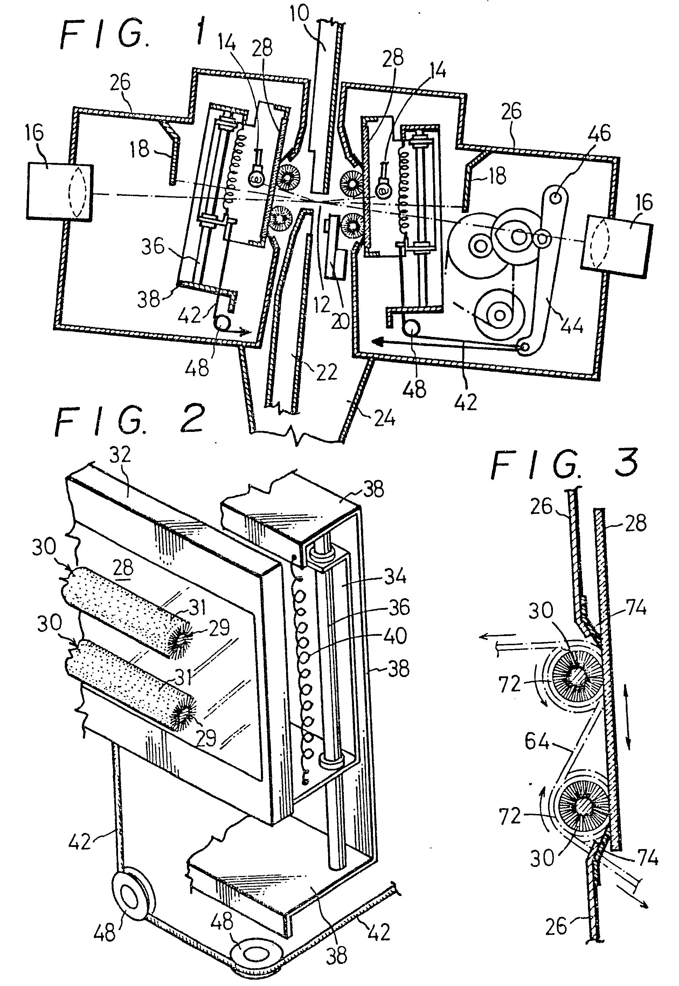

An outline of the optical selector in which one embodiment of the cleaning device according to the present invention is incorporated is illustrated in Fig. 1. The particulate articles to be selected are supplied to the upper end of a chute 10. They flow down the surface of the chute 10 by their tare weight, and under the condition of being accelerated at a predetermined velocity, they pour out of the lower end of the chute 10. The chute 10, being laterally wide, is divided into several compartments by bulkheads. The articles fall down each of these compartments and are selected from them. An inspecting point 12 is located just under the lower end of the chute 10. When the articles pass the inspecting point 12, the irradiation of the ray is applied to them from lamps 14 provided at both sides of the chute. The ray is reflected on their surface.

If they are translucent, the ray is partially transmitted. Polished rice particles for example are somewhat translucent, and transmit a partial portion of the ray. The light which is reflected on their surface and an extraordinary transmitted light reach sensors 16 provided at both sides of the apparatus. The light from the lamps 14 on both sides falls upon backscreens 18 respectively provided on both sides, and the light which is reflected on the backscreens 18 reaches the sensors 16. The quantitiy of light reflected on the backscreens 18 is set to coincide with the quantity of light reflected on the normal particulate articles (including the quantitiy of transmitted light for the extraordinary case). The sensors 16 inspect whether the quantity of light from the particulate articles is identical to the quantity of light from the backscreens 18. If there is any abnormality in the colour of the surface of the particulate article, it gives rise to a difference in the quantity of light, whereby the sensors 16 detect an existence of an abnormal particulate article. A signal of discovery of the abnormal particulate article is fed from the sensors 16 to an air injection device 20, which instantaneously blows air at high pressure against the abnormal particulate article, thereby blowing it away.

The reason why the air injection device 20 is slightly lower than the inspecting point 12 is because of a time lag neccessary for a commencement of the actuation of the air injection device 20, and when the particulate article which is judged as abnormal at the inspecting point 12 falls down to the position of the air injection device 20, the air is injected from the device. As mentioned above, since the chute 10 is divided into several compartments and the particulate articles fall down each of the compartments, both inspection of the quantitiy of light and the selection of the particulate articles by the injected air stream are individually done for each of the compartments. Thus, upon discovery of an abnormal articulate article, a simultaneous injection of the air blows it off so that it enters into a receiver 22 for the abnormal particulate article. Normal particulate articles do not receive the injected air, and fall straight down so as to enter a receiver 24 for normal particulate articles. If the normal particulate articles are close to an abnormal particulate article, the air injection, which is done within the range of an extremely small area, may sometimes blow off the abnormal particulate article together with the normal particulate articles. For this reason, an arrangement in which the particulate articles collected in the receiving part 22 for the abnormal particulate article are selected again to eliminate exactly only the abnormal particulate article is also possible.

The dust being blown up by the injected air stream does not adhere to the components, such as the lamps 14 and the backscreens 18, which are housed in the dust protective cabinet 26. The cabinet 26 however possesses a transparent window 28 at its opening through which the ray is transmitted. This window 28 is movable in a vertical direction. Rotating brushes 30 make contact with the surface of the window 28. The rotating brushes 30 have a multiplicity of brush hairs 31 planted radially around shafts 29 which are rotatably supported. It is acceptable if there is an entire hair planting system or a partial one; for instance the brush hairs 31 may be helically planted. Each brush 30 is rotated in the same position, and does not travel vertically with the window 28. Nevertheless, in spite of the vertical motion of the window 28, the rotating brush 30 keeps in contact with the surface of the window. Two rotating brushes 30 are arranged vertically and separately at two such positions along both the windows 28 respectively so that they do not obstruct the transmission of the ray. If brushes 30 are rotated and the windows 28 are moved, the dust which adheres to the window 28 is eliminated. While it may be acceptable to perform the cleaning work intermittently at adequately fixed intervals which take a situation of the dust into account, e.g. at intervals of 10 or 20 minutes, continuous performance of the cleaning operation during the article selection operation may also be acceptable.

A supporting and a driving means for the windows 28 and a driving means for the rotating brushes 30 are illustrated in Figs. 2, 3 and 4. The edges of the transparent window 28 are fixed to a frame 32. The frame 32 has a supporting member 34, which is slidably connected to a guide rod 36. The guide rod 36, which is fixed to a bracket or base 38, is stationary. A spring 40 which is disposed between the bracket 38 and the supporting member 34 always lifts up the window 28. Cables 42 for pulling down the windows 28 are connected to the frames 32 around the windows 28 on both sides. When the cable 42 is pulled the window 28 is moved down along the guide rod 36, whereas when the cable 42 is slackened, the window 28 is returned upwards by the force of the spring 40. The other end of the cable 42 is connected to the top end of a lever 44 and when the lever 44 is moved with the shaft 46 as a fulcrum, the cable 42 is pulled or slackened. The wire 42 is led by way of guide wheels 48 provided at suitable positions from the lever 44 to the frame 32. The lever 44 is moved by a cam 50. A roller 52 mounted upon the lever 44 is in contact with the cam 50. Rotation of the cam 50 thus causes oscillation of the lever 44. The cam 50, which is mounted on the same shaft 56 as that on which a gear 54 is mounted is rotated, when the gear 54 is rotated. When another gear 58 which is in mesh with the gear 54 is rotated, the gear 54 is rotated. The gear 58 is mounted on a shaft 62 on which the guide wheel 60 is also mounted and both are rotated together. Endless transmission means such as a chain or belt 64 is wound around the guide wheel 60. In the case of a chain, a sprocket serves as the guide wheel 60, while in the case of the belt, a pulley is used for that purpose. The endless transmission means 64 is also wound around a guide wheel 68 mounted on the shaft 67 of a motor 66. For thls reason, when the motor 66 is adapted to be moved, the endless transmission means 64 is moved, the guide wheel 60 being rotated. The endless transmission member 64 is wound by way of the guide wheel 70 disposed at a suitable positon also around the guide wheels 72 mounted on the shaft 29 of the rotating brushes 30 respectively. For this reason, upon moving the endless transmission means 64, all the brushes 30 are rotated at the same time. The edges of the window openings of the cabinet 26 have elastic shielding members 74, the top ends of which are in contact with the surface of the window, to prevent the dust from making a forcible entry into the inside from the gap between the end of the window opening and the window 28.

The afore-mentioned device functions as follows: If the particulate articles, such as grain, to be selected are supplied to the upper end of the chute 10, they slide along the surface of the chute 10 and being accelerated at an adequate velocity, pour out of the lower end of the chute 10. When they reach the inspecting point 12, irradiation by the ray from the lamps 14 is applied to their back and front surfaces. The light which is reflected on them reaches the sensors 16 provided on both sides. If they are translucent, the transmitted light is added to the reflected light. A comparison between the light from them and the light which is reflected on the backscreens 18 is made. Since the quantitiy of the light which is reflected on the backscreens 18 is set to coincide with the quantity of the light from abnormal articles, if there is a difference in the quantity of light from both, the sensors 16 are in a position to detect the existence of an abnormal particulate article. Since the quantity of the reflected light and the transmitted light from the particulate article having an abnormality upon the colour of its surface is different from the quantity of the light from the normal particulate articles, the sensors 16 can easily discover an abnormal particulate article. The signal of discovery of the abnormal particulate article is fed from the sensors 16 to the air injection device 20 and instantaneously a jet of air at high pressure is projected. The particulate articles then fall down to the position of the front face of the air injection equipment 20, so the air jet blows off the particulate articles into the receiver 22. Normal particulate articles, which are not detected by the sensors 16, since they do not undergo an injection of air fall straight down and enter the receiver 24. Thus, the particulate article having colour abnormality on its surface is selected to be eliminated. Since the selecting and eliminating process is done by an air jet, the fine dust on the surface of the articles to be selected, e.g. the salt and a fine powder for the grain, is blown up and adheres to the surface of the window 28. If the amount of thus adhering dust is increased, transmission of the ray is obstructed, and the selecting performance is impeded. For this reason, at fixed intervals which take the dust situation into account, e.g. at intervals of 10 minutes, the cleaning device is actuated. Usually, a timer is utilized for intermittent work setting at suitable intervals. A control by the timer intermittently drives the motor 66. If the motor 66 starts, the endless transmission means 66 starts to rotate the brush 30 and the guide wheel 60 is rotated at the same time. Rotation of the guide wheel 60 is transmitted by way of the gears 58 and 54 to the cam 50, which, being rotated, oscillates the lever 44, and tensions or slackens the top cables 42. As a result, when tensioning the cable 42, the windows 28 on both sides are moved downward, whereas when slackening the cable 42, the windows 28 are returned upward by the force of the spring 40. Once the lever 44 is oscillated, the window 28 is once vertically reciprocated. Upon rotation of the brush 30, the window 28 is concurrently moved in a vertical direction, so that the dust which adheres to the surface of the window 28 is eliminated by the brush 30. In an ordinary case, since a reciprocal motion of the window 28 may almost fully eliminate the dust, it is preferable that the motor 66 is driven only during such reciprocal motion and subsequently the motor 66 is stopped. Where the amount of adherent dust is considerably larger, it is also possible to drive the motor 66 during a plurality of reciprocal motions, a continuous drive of the motor 66 being permitted.

The foregoing embodiment of the cleaning device has a window 28 which can be moved vertically. A modification is possible in which the window 28 is laterally movable, and if a curved window of semi-circular shape is used, a semi-circular motion thereof can be arranged.

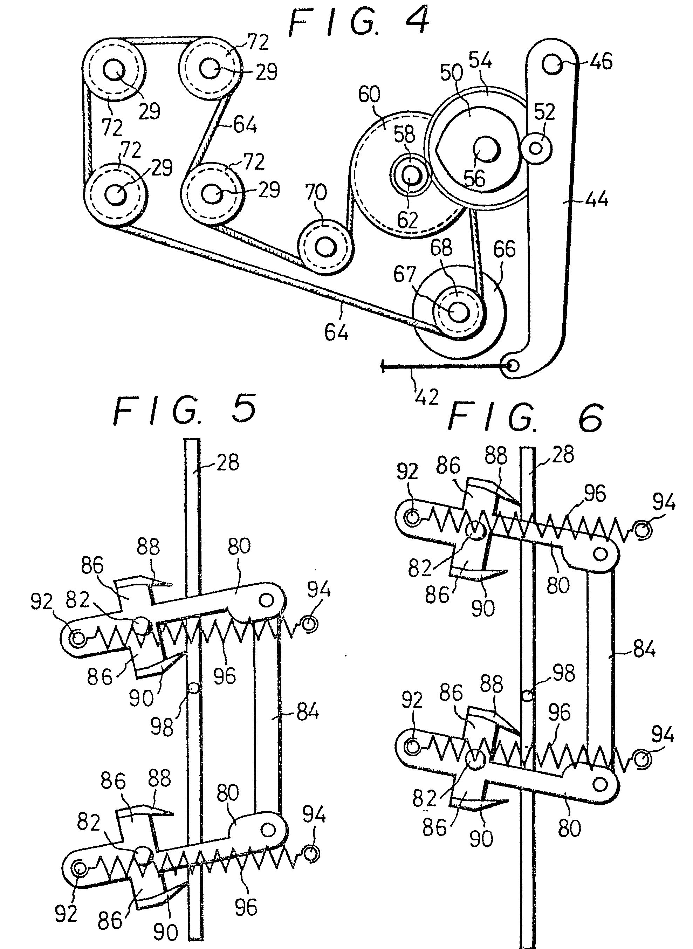

Referring now to Figs. 5 and 6, illustrating another embodiment of the scraper, oscillating members 80 are slidably supported by shafts 82. Two oscillating members 80 are vertically provided, and are connected to each other by a connecting rod 84. For this reason, the upper and lower members 80 are always oscillated in unison. The upper and lower sides of the members 80 possess arms 86, to which scrapers 88 and 90 are mounted. These scrapers 88 and 90, are resilient and made of rubber. The oscillating members 80 are provided on the respective sides of the window 28, and the scrapers 88 and 90 form a bridge between the oscillating members 80 on both sides. Springs 96 are stretched between the pins 92 of the oscillating members 80 and the fixed pins 94 thereof. When the window 28 reaches its uppermost or lowest position, a projection 98 which is mounted on the side edge of the window 98 collides with the oscillating members 80, whereby the members 80 are pushed to be oscillated in, an opposite direction. Thus, when the window 28 reaches its uppermost position, the projection 98 collides with the upper oscillating member 80, whereby the members 80 are brought to the state shown in Fig. 5. In this state, the top end of the lower scraping piece 90 comes into contact with the surface of the window 28. Furthermore, such a state is held by a tensile force of the spring 96, even commencement of the descent of the window 28 being unable to release the state. As a result, the dust which adheres to the surface of the window 28 is eliminated by the scraper 90. When the window 28 reaches its lowest position, the projection 98 pushes the lower oscillating member 80, thereby moving it into a state such as shown in Fig. 6. At that time, the upper scraper 88 turns into contact with the surface of the window 28. When the window 28 makes an ascent, the dust which adheres to the surface of the window 28 is eliminated. Thus, as a result of making a shift in using the upper and lower scrapers 88 and 90, no mass of dust is left on the surface of the window 28 through the complete cleaning. Thus, when the window 28 makes a descent, the dust which adheres thereto is scraped off by the scraper 90, but some portions of the scraped dust which are left as a mass on the top end of the scraper 90, remain in the state of adhering to the surface of the window 28, when the window 28 makes a change from the lowest position to an ascent. If such a mass of dust is left on the surface of the window 28, it obstructs the transmission of the ray. Nevertheless, as mentioned above, since the oscillating member 80 makes a change to the opposite side and the upper scraper 88 turns out to get in contact with the surface of the window 28, a mass of remaining dust is eliminated by the scraper 88.

## Claims

1. Optical selector apparatus wherein articles to be selected are caused to fall past an irradiation ray projected through an opening (12) for transmitting the ray through a dust preventive cabinet (26) via a transparent window (28), and the quantity of light transmitted through or by the articles to be selected is inspected, the article to be selected having an abnormality in its quantity of light being eliminated by air injection, the apparatus comprising a window cleaning device incorporating at least one dust scraper (30) installed so as continually to contact the external surface of the window (28) characterised in that in said window cleaning device the dust scraper (30) husafixed position and at least one window (28) is supported by a linear guide (36) along which the window is movable in a linear manner relative to said opening; and in that a device (32, 42, 44, 52, 50, 38, 40) is provided for moving the window, and as the window moves, said guide (36) being fixed to a base member (38), a spring (40) being disposed between the base member (38) and the window (28) and a traction member (42) connected to the window, the window being moved along the guide (36) when the traction member (42) is operative and returned to its original position by the spring (40) when the traction member (42) is released.

2. Apparatus as defined in claim 1, wherein a dust scraper (30) is a rotating brush.

3. Apparatus as defined in claim 1, wherein the a dust scraper comprises resilient scraping pieces (88, 89) which are detachably in contact with the surface of the window, said scraping pieces being mounted to both sides respectively of oscillating members (80), whereby when the oscilling members (80) are moved to one side, a scraping piece (88) positioned to such a side comes into contact with the surface of the window, whereas when the members are moved to another side, a scraping piece (89) positioned to the opposite side comes into contact with the surface of the window.

4. Apparatus as defined in claim 1, wherein oscillating members (80) possessing two scraping pieces (88, 89) are provided on their upper and lower parts respectively between which the area of transmitting the ray is interposed, the upper and lower oscillating members, which are connected to each other, being adapted to be integrally moved, a collision of a projection (98) mounted to the side edge of the window with the oscillating members (80) causing their position to be shifted.

## Patentansprüche

1. Optisches Sortiergerät, in dem zu sortierende Erzeugnisse an einer Beleuchtungsstrahlung vorbei fallen, die durch eine Öffnung (12) durchtritt, um über ein transparentes Fenster (28) durch eine Staub abhaltende Zelle (26) zu verlaufen, wobei die durch oder von den zu sortierenden Erzeugnisse abgegebene Lichtmenge geprüft wird und das zu sortierende Erzeugnis, das eine abnormale Lichtmenge aufweist, mittels eingeblasener Luft aussortiert wird, wobei das Gerät eine Fensterreinigungsvorrichtung mit wenigstens einem Staubschaber (30) aufweist, der so angeordnet ist, dass er stetig in Kontakt mit der Aussenfläche des Fensters (28) steht, dadurch gekennzeichnet, dass der Staubschaber (30) der Fensterreinigungsvorrichtung eine feststehende Position hat, dass wenigstens ein Fenster (28) von einer linearen Führung (26) gehalten ist, entlang der das Fenster auf lineare Weise gegenüber der Öffnung bewegbar ist, und dass eine Einrichtung (32, 42, 44, 52, 50, 38, 40) vorgesehen ist zum Bewegen des Fensters, wobei bei der Bewegung des Fensters die Führung (36) an einem Basisbauteil (38) befestigt ist, eine Feder (40) zwischen dem Basisbauteil (38) und dem Fenster (28) angeordnet und ein Zugbauteil (42) mit dem Fenster verbunden ist, und dass das Fenster entlang der Führung (36) bewegt wird, wenn das Zugbauteil (42) betätigt wird, und mittels der Feder (40) in die Ausgangsposition zurückkehrt, wenn das Zugbauteil (42) freigegeben ist.

2. Gerät nach Anspruch 1, dadurch gekennzeichnet, dass der Staubschaber (30) eine rotierende Bürste ist.

3. Gerät nach Anspruch 1, dadurch gekennzeichnet, dass der Staubschaber elastische Schaberteile (88, 89) aufweist, die lösbar in Berührung mit der Fensterfläche stehen, dass die Schaberteile an beiden Seiten von oszillierenden Bauteilen (80) befestigt sind und dass dann, wenn die oszillierenden Bauteile (80) zu der einen Seite bewegt sind, ein an der zugehörigen Seite positioniertes Schaberteil (88) in Kontakt mit der Fensterfläche gerät, während dann, wenn die Bauteile zu der anderen Seite bewegt sind, ein an der gegenüberliegenden Seite positioniertes Schaberteil (89) in Kontakt mit der Fensterfläche kommt.

4. Gerät nach Anspruch 1, dadurch gekennzeichnet, dass oszillierende Bauteile (80), die zwei Schaberteile (88, 89) aufweisen, an oberen und unteren Teilen vorgesehen sind, zwischen denen der Übertragungsbereich der Strahlung liegt, dass das obere und untere oszillierende Bauteil miteinander verbunden und gemeinsam bewegbar sind und dass beim Anstossen des oszillierenden Bauteils (80) an einen an einem Seitenrad des Fensters angeordneten Vorsprung (98) deren Postition verändert wird.

**Revendications**

1. Appareil formant sélecteur optique, dans lequel des produits devant être sélectionnés sont amenés à se déplacer devant un faisceau de rayonnement projeté à travers une ouverture (12) et servant à transmettre le faisceau à travers un coffret anti-poussières (26) par l'intermédiaire d'une fenêtre transparente (28), et la quantité de lumière transmise à travers ou par les produits devant être sélectionnés, est axaminée, le produit devant être sélectionné présentant une quantité de lumière anormale étant éliminé par injection d'air, cet appareil comprenant un dispositif de nettoyage de la fenêtre contenant au moins un dispositif (30) d'élemination par raclage de la poussière installé de manière à être en permanence en contact avec la surface extérieure de la fenêtre (26), caractérisé en ce que le dispositif (30) d'élimination par raclage de la poussière du dispositif de nettoyage de la fenêtre possède une position fixe et qu'au moins une fenêtre (28) est portée par un guide linéaire (36), le long duquel la fenêtre est déplaçable selon un mouvement linéaire par rapport à ladite ouverture; et en ce qu'il est prévu un dispositif (32, 42, 44, 52, 50, 38, 40) servant à déplacer la fenêtre, et que, lorsque la fenêtre se déplace, alors que ledit guide (36) est fixé à un élément de base (38), qu'un ressort (40) est disposé entre l'élément de base (38) et la fenêtre (28) et qu'un élément de traction (42) est raccordé à la fenêtre, la fenêtre se déplace le long du guide (36) lorsque l'élément de traction (42) est actif et est ramenée dans sa position initiale par le ressort (40) lorsque l'élément de traction (42) est relâché.

2. Appareil selon la revendication 1, dans lequel un dispositif (30) d'élimination par raclage de la poussière est une brosse rotative.

3. Appareil selon la revendication 1, dans lequel le dispositif d'élimination par raclage de la poussière comprend des éléments élastiques de raclage (88, 89), qui sont, de façon amovible, en contact avec la surface de la fenêtre, lesdits éléments de raclage étant montés sur deux côtés d'éléments oscillants respectifs (80), ce qui a pour effet que, lorsque les éléments oscillants (80) sont amenés d'un côté, un élément de raclage (88) positionné sur un tel côté vient en contact avec la surface de la fenêtre, tandis que, lorsque les éléments sont amenés de l'autre côté, un élément de raclage (89) situé sur le côté opposé vient en contact avec la surface de la fenêtre.

4. Appareil selon la revendication 1, dans lequel des éléments oscillants (80) comportant deux éléments de raclage (88, 89) portent, sur leurs parties supérieure et inférieure respectives, entre lesquelles se situe la zone de transmission du faisceau, les éléments oscillants supérieur et inférieur, qui sont raccordés l'un à l'autre, étant adaptés de manière à être déplacés d'un seul tenant, tandis qu'une collision entre une partie saillante (98) montée sur le bord latéral de la fenêtre avec les éléments oscillants (81) entraîne und décalage de leur position.

FIG. 1

FIG. 2

FIG. 3

## 2/2
## FIG. 4

## FIG. 5

## FIG. 6